# EUROPEAN PATENT APPLICATION

(11) **EP 4 715 627 A1**
(43) Date of publication of application: **25.03.2026**
(21) Application number: 24822396.8
(22) Date of filing: 19.04.2024
(51) Int. Cl.: G06F 16/27

(54) **DATA SYNCHRONIZATION METHOD, APPARATUS, DEVICE AND STORAGE MEDIUM**

(30) Priority: 13.06.2023 CN 202310698905
(71) Applicant: Huawei Cloud Computing Technologies Co., Ltd., Guiyang, Guizhou, 550025 (CN)
(72) Inventor: TIAN, Wenhao, Guiyang, Guizhou 550025 (CN); YANG, Tao, Guiyang, Guizhou 550025 (CN); YUAN, Jing, Guiyang, Guizhou 550025 (CN)
(74) Representative: Pfenning, Meinig & Partner mbB
(86) International application number: PCT/CN2024/088952
(87) International publication number: WO 2024/255441

(57) **Abstract**

This application provides a data synchronization method and apparatus, a device, and a storage medium, and relates to the field of data storage technologies. The method includes: obtaining, from an incremental log in a source database, N incremental operation record sets arranged in a chronological order, where N is an integer greater than 1, and an N^{th} incremental operation record set is a current to-be-synchronized incremental operation record set. The method further includes: determining a target incremental operation record set based on a validation code of an incremental operation record set that is before the N^{th} incremental operation record set, where the target incremental operation record set is an incremental operation record set that is successfully synchronized to a target database last time. The method further includes: synchronizing, to the target database, an incremental operation record set that is in the N incremental operation record sets and that is after the target incremental operation record set. In embodiments of this application, during synchronization of an incremental operation record set, a synchronization exception can be quickly discovered and automatic recovery can be performed, thereby implementing accurate synchronization between databases and improving user experience.

## Description

### CROSS-REFERENCE TO RELATED APPLICATIONS

This application claims priority to Chinese Patent Application No. 202310698905.X, filed on June 13, 2023 and entitled "DATA SYNCHRONIZATION METHOD AND APPARATUS, DEVICE, AND STORAGE MEDIUM", which is incorporated herein by reference in its entirety.

### TECHNICAL FIELD

Embodiments of this application mainly relate to the data storage field. More specifically, embodiments of this application relate to a data synchronization method and apparatus, a device, and a storage medium.

### BACKGROUND

In rapid development processes of various applications, to facilitate management and use of data, a user usually uses a database to store these data. The database is used to store a data set electronically. The database may include data of any type, including characters, numbers, images, videos, files, and the like. With an increase in user requirements, functions and performance of the database are also improved rapidly. The improvement of the functions and the performance of the database is very important for organizations and users who use the database. This is because suitable functions can significantly improve a data processing capability of the users, and save time and resources of the users.

With development of database technologies, a plurality of sets of storage systems are used for a complex service system. For example, a first-type database serves as a service transactional database to carry a service, and a second-type database serves as a full-text search analytical database in the meantime. However, many technical problems need to be resolved for a collaborative operation of data services that is performed between databases. For example, how to improve data synchronization performance between the databases is an important technical problem.

### SUMMARY

Embodiments of this application provide a data synchronization solution.

According to a first aspect of this application, a data synchronization method is provided. The method is applied to a database system, and the database system includes a source database and a target database. The method includes: obtaining, from an incremental log in the source database, N incremental operation record sets arranged in a chronological order, where N is an integer greater than 1, and an N^{th} incremental operation record set is a current to-be-synchronized incremental operation record set; determining a target incremental operation record set based on a validation code of an incremental operation record set that is before the N^{th} incremental operation record set, where the target incremental operation record set is an incremental operation record set that is successfully synchronized to the target database last time; and synchronizing, to the target database, an incremental operation record set that is in the N incremental operation record sets and that is after the target incremental operation record set.

In this manner, during synchronization of the N^{th} incremental operation record set, it is ensured that both the Nth incremental operation record set and the incremental operation record set that is before the Nth incremental operation record set are synchronized to the target database, so that during incremental operation record set synchronization in real time, there are capabilities of quickly discovering a synchronization exception according to a consistency validation method and automatically recovering data that has a synchronization exception, to resolve an exception like a rollback that occurs in the database, ensure accurate synchronization of an operation and data between databases, and improve user experience.

In some embodiments, the method further includes: generating a validation code of the N^{th} incremental operation record set; and sending the validation code of the N^{th} incremental operation record set to the target database after it is determined that the N^{th} incremental operation record set has been successfully synchronized to the target database, where the validation code of the N^{th} incremental operation record set is used to be stored in the target database. In this manner, a validation code can be generated and the validation code can be stored in the target database, so that consistency validation can be implemented, thereby quickly discovering a synchronization exception and automatically recovering data that has a synchronization exception.

In some embodiments, the determining the target incremental operation record set based on the validation code of the incremental operation record set that is before the N^{th} incremental operation record set includes: obtaining a comparison validation code from the target database, where the comparison validation code is stored in the target database and is a validation code of a latest incremental operation record set that has been successfully synchronized to the target database; and searching for a validation code that is the same as the comparison validation code and that is in the validation code of the incremental operation record set that is before the N^{th} incremental operation record set, and determining the target incremental operation record set, where the validation code of the target incremental operation record set is the same as the comparison validation code. In this manner, an incremental operation record set that needs to be synchronized can be quickly and accurately determined by using a validation code, thereby resolving a synchronization exception and automatically recovering data that has a synchronization exception.

In some embodiments, a type of the source database is different from a type of the target database, the N incremental operation record sets are N intermediate-format incremental operation record sets, and obtaining, from the incremental log in the source database, the N incremental operation record sets arranged in the chronological order includes: obtaining an N^{th} source-format incremental operation record set from the incremental log in the source database by using a parser that matches the type of the source database; and converting the N^{th} source-format incremental operation record set into an N^{th} intermediate-format incremental operation record set. In this manner, incremental operation records between a plurality of databases of different types can be synchronized.

In some embodiments, the synchronizing, to the target database, the incremental operation record set that is in the N incremental operation record sets and that is after the target incremental operation record set includes: converting the N^{th} intermediate-format incremental operation record set into an N^{th} target-format incremental operation record set by using an adapter that matches the type of the target database; and sending the N^{th} target-format incremental operation record set to the target database, for causing the target database to perform an incremental operation corresponding to the N^{th} target-format incremental operation record set. In this manner, incremental operation records between a plurality of databases of different types can be synchronized.

In some embodiments, the synchronizing, to the target database, the incremental operation record set that is in the N incremental operation record sets and that is after the target incremental operation record set includes: selecting, from the N^{th} intermediate-format incremental operation record set based on an identifier of a target data table, an intermediate-format incremental operation record related to the target data table; converting, into a target-format incremental operation record related to the target data table, the intermediate-format incremental operation record related to the target data table; and sending, to the target database, the target-format incremental operation record related to the target data table, for causing the target database to perform an incremental operation corresponding to the target-format incremental operation record related to the target data table. In this manner, incremental operation records between data tables in a plurality of databases of different types can be synchronized.

In some embodiments, the obtaining, from the incremental log in the source database, the N incremental operation record sets arranged in the chronological order includes: obtaining, from the incremental log in the source database based on an identifier of a target data table, the N incremental operation record sets arranged in the chronological order. In this manner, incremental operation records between data tables in databases of a same type can be synchronized.

In some embodiments, the synchronizing, to the target database, the incremental operation record set that is in the N incremental operation record sets and that is after the target incremental operation record set includes: selecting, from the N^{th} incremental operation record set based on an identifier of a target data table, an incremental operation record related to the target data table; and sending, to the target database, the incremental operation record related to the target data table, for causing the target database to perform an incremental operation corresponding to the incremental operation record related to the target data table. In this manner, incremental operation records between data tables in databases of a same type can be synchronized.

In some embodiments, the synchronizing, to the target database, the incremental operation record set that is in the N incremental operation record sets and that is after the target incremental operation record set includes: sending the N^{th} incremental operation record set to the target database, for causing the target database to perform an incremental operation corresponding to the N^{th} incremental operation record set. In this manner, the N^{th} incremental operation record set between databases can be accurately synchronized.

In some embodiments, the generating the validation code of the N^{th} incremental operation record set includes: generating the validation code of the N^{th} incremental operation record set based on a validation code of an (N-1)^{th} incremental operation record set and the N^{th} incremental operation record set. In this manner, validation information of an incremental operation record set can be quickly and accurately obtained, to validate the incremental operation record set.

According to a second aspect of this application, a data synchronization apparatus is provided. The apparatus is used in a database system, and the database system includes a source database and a target database. The data synchronization apparatus is deployed in a cloud management platform, the source database, or the target database. The apparatus includes: an incremental operation record set obtaining unit, configured to obtain, from an incremental log in the source database, N incremental operation record sets arranged in a chronological order, where N is an integer greater than 1, and an N^{th} incremental operation record set is a current to-be-synchronized incremental operation record set; a target incremental operation record set determining unit, configured to determine a target incremental operation record set based on a validation code of an incremental operation record set that is before the N^{th} incremental operation record set, where the target incremental operation record set is an incremental operation record set that is successfully synchronized to the target database last time; and an incremental operation record set synchronization unit, configured to synchronize, to the target database, an incremental operation record set that is in the N incremental operation record sets and that is after the target incremental operation record set.

In some embodiments, the data synchronization apparatus further includes: a validation code generation unit, configured to generate a validation code of the N^{th} incremental operation record set; and a validation code sending unit, configured to send the validation code of the N^{th} incremental operation record set to the target database after it is determined that the N^{th} incremental operation record set has been successfully synchronized to the target database, where the validation code of the N^{th} incremental operation record set is used to be stored in the target database.

In some embodiments, the target incremental operation record set determining unit includes: a comparison validation code obtaining unit, configured to obtain a comparison validation code from the target database, where the comparison validation code is stored in the target database and is a validation code of a latest incremental operation record set that has been successfully synchronized to the target database; and a validation code searching unit, configured to: search for a validation code that is the same as the comparison validation code and that is in the validation code of the incremental operation record set that is before the N^{th} incremental operation record set, and determine the target incremental operation record set, where the validation code of the target incremental operation record set is the same as the comparison validation code.

In some embodiments, a type of the source database is different from a type of the target database, the N incremental operation record sets are N intermediate-format incremental operation record sets, and the incremental operation record set obtaining unit includes: a parser-based incremental operation record set obtaining unit, configured to obtain an N^{th} source-format incremental operation record set from the incremental log in the source database by using a parser that matches the type of the source database; and a first incremental operation record set conversion unit, configured to convert the N^{th} source-format incremental operation record set into an N^{th} intermediate-format incremental operation record set.

In some embodiments, the incremental operation record set synchronization unit includes: a second incremental operation record set conversion unit, configured to convert the N^{th} intermediate-format incremental operation record set into an N^{th} target-format incremental operation record set by using an adapter that matches the type of the target database; and an incremental operation record set sending unit, configured to send the N^{th} target-format incremental operation record set to the target database, for causing the target database to perform an incremental operation corresponding to the N^{th} target-format incremental operation record set.

In some embodiments, the incremental operation record set synchronization unit includes: a first incremental operation record filtering unit, configured to select, from the N^{th} intermediate-format incremental operation record set based on an identifier of a target data table, an intermediate-format incremental operation record related to the target data table; a data table-based incremental operation record conversion unit, configured to convert, into a target-format incremental operation record related to the target data table, the intermediate-format incremental operation record related to the target data table; and a first incremental operation record sending unit, configured to send, to the target database, the target-format incremental operation record related to the target data table, for causing the target database to perform an incremental operation corresponding to the target-format incremental operation record related to the target data table.

In some embodiments, the incremental operation record set obtaining unit includes: a data table-based incremental operation record set obtaining unit, configured to obtain, from the incremental log in the source database based on an identifier of a target data table, the N incremental operation record sets arranged in the chronological order.

In some embodiments, the incremental operation record set synchronization unit includes: a second incremental operation record filtering unit, configured to select, from the N^{th} incremental operation record set based on an identifier of a target data table, an incremental operation record related to the target data table; and a second incremental operation record sending unit, configured to send, to the target database, the incremental operation record related to the target data table, for causing the target database to perform an incremental operation corresponding to the incremental operation record related to the target data table.

In some embodiments, the incremental operation record set synchronization unit includes: a target database synchronization unit, configured to send the N^{th} incremental operation record set to the target database, for causing the target database to perform an incremental operation corresponding to the N^{th} incremental operation record set.

In some embodiments, the validation code generation unit includes: an incremental operation record set validation code generation unit, configured to generate the validation code of the N^{th} incremental operation record set based on a validation code of an (N-1)^{th} incremental operation record set and the N^{th} incremental operation record set.

According to a third aspect of this application, a computing device cluster is further provided, and includes at least one computing device. Each computing device includes a processor and a memory. The processor of the at least one computing device is configured to execute instructions stored in the memory of the at least one computing device, to cause the computing device cluster to perform the method according to the first aspect of this application.

According to a fourth aspect of this application, a computer program product including instructions is further provided. When the instructions are run by a computing device cluster, the computing device cluster is caused to perform the method according to the first aspect of this application.

According to a fifth aspect of this application, a computer-readable storage medium is further provided, and includes computer program instructions. When the computer program instructions are executed by a computing device cluster, the computing device cluster performs the method according to the first aspect of this application.

It may be understood that the apparatus according to the second aspect, the computing device cluster according to the third aspect, the computer program product according to the fourth aspect, or the computer-readable storage medium according to the fifth aspect is configured to perform the method according to the first aspect. Therefore, explanations or descriptions of the first aspect are also applicable to the second aspect, the third aspect, the fourth aspect, and the fifth aspect. In addition, for beneficial effects that can be achieved in the second aspect, the third aspect, the fourth aspect, and the fifth aspect, refer to the beneficial effects of the corresponding method. Details are not described herein again.

### BRIEF DESCRIPTION OF DRAWINGS

The foregoing and other features, advantages, and aspects of embodiments of this application become clearer with reference to accompanying drawings and the following detailed descriptions. In the accompanying drawings, same or similar reference numerals indicate same or similar elements.
FIG. 1 is a diagram of an example environment in which a plurality of embodiments of this application can be implemented;
FIG. 2 is a diagram of an example for synchronizing an incremental operation record set according to some embodiments of this application;
FIG. 3 is a diagram of another example for synchronizing an incremental operation record set according to some embodiments of this application;
FIG. 4 is a schematic flowchart of a data synchronization method according to some embodiments of this application;
FIG. 5 is a diagram of an example for generating a hash value of an incremental operation record set according to some embodiments of this application;
FIG. 6 is a block diagram of a data synchronization apparatus according to some embodiments of this application;
FIG. 7 is a block diagram of an example device that may be used to implement an example implementation of this disclosure;
FIG. 8 is a block diagram of an example device cluster that may be used to implement an example implementation of this disclosure; and
FIG. 9 is a block diagram of another example device that may be used to implement an example implementation of this disclosure.

### DESCRIPTION OF EMBODIMENTS

The following describes embodiments of this application in more detail with reference to accompanying drawings. Although some embodiments of this application are shown in the accompanying drawings, it should be understood that this application may be implemented in various forms and should not be construed as being limited to embodiments described herein, and instead, these embodiments are provided for a more thorough and complete understanding of this application. It should be understood that, the accompanying drawings and embodiments of this application are merely used as examples, but are not used to limit the protection scope of this application.

In descriptions of embodiments of this application, the term "include" and similar terms thereof should be understood as open inclusion, that is, "include but not limited to". The term "based on" should be understood as "at least partially based on". The term "one embodiment" or "this embodiment" should be understood as "at least one embodiment". The terms "first", "second", and the like may indicate different objects or a same object. Other explicit and implicit definitions may also be included below.

As described above, many technical problems need to be resolved for a collaborative operation of data services that is performed between databases. A conventional solution for collaborative processing of data services between different databases is service dual-write. When performing a database operation, a service party simultaneously operates a plurality of databases. However, when an actual service function is implemented, a database dual-write solution brings extra costs, for example, increases response time, increases development complexity, and brings a service loss due to data consistency. Transaction management of each data type is relatively independent. Therefore, it needs to ensure that modification of same data in a plurality of databases succeeds/fails simultaneously. This brings inevitable difficulty to service implementation.

To avoid the foregoing problems, another conventional solution is database synchronization. In this solution, changes of a core database are subscribed to, and other secondary databases are updated, so that data is synchronized between different databases. The solution of the database synchronization resolves complexity infringement caused by dual-write to services. However, for a specific service party, implementation of the database synchronization is usually not universal, and data synchronization is usually performed based on a specific service. In addition, this solution lacks a data consistency validation method for different data types. For example, when an exception like a rollback occurs in the database, a synchronization data receiver lacks a consistency validation mechanism for discovering the exception in time and resynchronizing incremental data from latest normal data.

To resolve at least some problems in the foregoing problems and other potential problems, in embodiments of this application, a synchronization manager obtains, from an incremental log in a source database, N incremental operation record sets arranged in a chronological order, where an N^{th} incremental operation record set is a current to-be-synchronized incremental operation record set. Then, the synchronization manager determines a target incremental operation record set from the N incremental operation record sets based on a validation code of an incremental operation record set that is before the N^{th} incremental operation record set, where the target incremental operation record set is an incremental operation record set that is successfully synchronized to a target database last time. Next, the synchronization manager synchronizes, to the target database, an incremental operation record set that is in the N incremental operation record sets and that is after the target incremental operation record set. Based on this manner, in embodiments of this application, during synchronization of the N^{th} incremental operation record set, it can be ensured that the N incremental operation record sets and the incremental operation record set that is before the N^{th} incremental operation record set are all synchronized to the target database, so that during incremental operation record set synchronization in real time, there are capabilities of quickly discovering a synchronization exception according to a consistency validation method and automatically recovering data that has a synchronization exception, to resolve an exception like a rollback that occurs in the database, ensure accurate synchronization of an operation and data between databases, and improve user experience. Further, in embodiments of this application, an incremental operation record set may be further synchronized between databases of different types, thereby implementing a solution of data synchronization between a plurality of databases of different types.

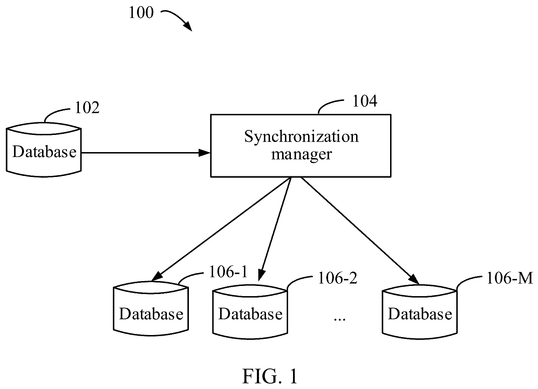

FIG. 1 is a diagram of an example environment 100 in which a plurality of embodiments of this application can be implemented. As shown in FIG. 1, the environment 100 includes a synchronization manager 104. The synchronization manager 104 is configured to synchronize an incremental log in a database 102 to databases 106-1, 106-2, ..., and 106-M, where M is a positive integer. For ease of description, the database 102 may also be referred to as a source database 102, and the databases 106-1, 106-2, ..., and 106-M are also referred to as a database 106 or a target database 106. FIG. 1 shows one database 102 as a source database. This is merely an example, but is not a specific limitation on this disclosure. A plurality of databases may serve as the source database. Alternatively or additionally, the source database and the target database form a database system. In some embodiments, an incremental log in the target database 106 may also be synchronized to the source database 102.

In some embodiments, the data synchronization manager 104 may be deployed in a cloud management platform, the source database, or the target database. In some embodiments, the synchronization manager 104 may be implemented in a personal computer, a server, a handheld or laptop device, a mobile device, a multiprocessor system, a consumer electronic product, a minicomputer, a mainframe computer, and a distributed computing environment including any one of the foregoing systems or devices. In some embodiments, the synchronization manager 104 may include, but is not limited to, a personal computer, a server, a handheld or laptop device, a mobile device, a multiprocessor system, a consumer electronic product, a minicomputer, a mainframe computer, a distributed computing environment including any one of the foregoing systems or devices, and the like. The foregoing examples are merely used to describe this disclosure, but are not specific limitations on this disclosure.

When a user performs an operation on the source database 102, for example, an operation of adding, deleting, or modifying data in a database or one or more data tables in the database, an incremental log corresponding to a database operation is generated and stored in the source database. For example, the incremental log records specific operations performed on the database, operation performing time, and the like. Additionally, the incremental log may also record specific tables that are in the database and that are operated. To ensure that these database operations performed in the source database 102 are also performed in the target database 106, the synchronization manager 104 needs to obtain the incremental log in the source database 102 to generate an incremental operation record set, and then sends an incremental operation record in the incremental operation record set to the target database 106 to perform a corresponding incremental operation. In one example, the synchronization manager 104 requests an incremental log in a corresponding period of time from the source database 102 at a specific time interval or at a preset moment. In another example, the source database 102 may actively transfer an incremental log in a specific period of time or a specific quantity of incremental logs to the synchronization manager. The foregoing examples are merely used to describe this disclosure, but are not specific limitations on this disclosure. A person skilled in the art may obtain an incremental log from the source database in any suitable manner.

After obtaining the incremental log, the synchronization manager 104 generates the incremental operation record set, and then stores the incremental operation record set in a local memory. In one example, the synchronization manager 104 may store all incremental operation record sets formed by incremental logs from the source database. In another example, storage space of the synchronization manager 104 is limited, and the storage space of the synchronization manager 104 can store only a preset quantity of incremental operation record sets. In this case, only a preset quantity of incremental operation record sets in a sliding time/space window can be stored. For example, when a quantity of incremental operation record sets that have been stored in the synchronization manager does not reach the preset quantity, a newly received incremental operation record set may be stored. If a quantity of incremental operation record sets that have been stored reaches the preset quantity, when a new incremental operation record set is received, an incremental operation record set stored for longest time needs to be deleted to store the newly received incremental operation record set. Alternatively or additionally, when obtaining the incremental operation record set, the synchronization manager 104 further generates a validation code for the incremental operation record set, where the validation code may be used to validate the incremental operation record set.

Next, the synchronization manager 104 further sends a locally stored incremental operation record set to the target database 106, to perform a corresponding incremental operation in the target database 106 based on an incremental operation record in the incremental operation record set (it should be noted that, for ease of description, performing the incremental operation in the target database based on the incremental operation record is also directly referred to as performing the incremental operation record in the target database below in this application). When a to-be-synchronized incremental operation record set is to be sent from the synchronization manager 104 to the target database 106, the synchronization manager 104 needs to determine a target incremental operation record set that has been successfully synchronized to the target database 106 and that is before the to-be-synchronized incremental operation record set. Then, an incremental operation record set that is after the target incremental operation record set is synchronized to the target database 106, to implement a database operation between the source database 102 and the target database 106 or accurate data synchronization.

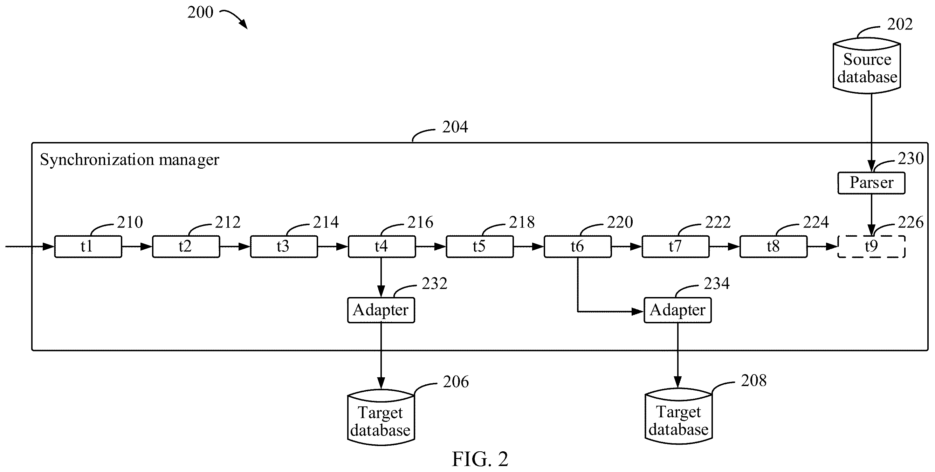

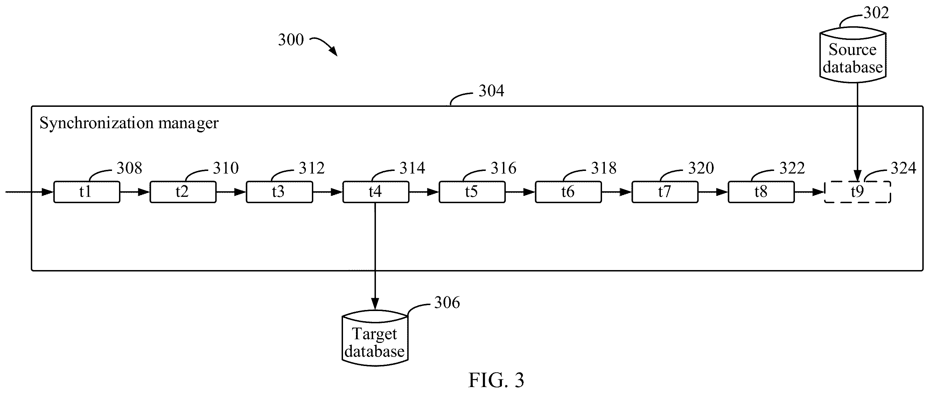

In some embodiments, a type of the source database 102 is different from a type of the target database 106. With the type of the source database 102 being different from the type of the target database 106, the incremental operation record set may be synchronized between databases of different types with reference to the following descriptions in FIG. 2. In some embodiments, a type of the source database 102 is the same as a type of the target database 106. With the type of the source database 102 being the same as the type of the target database 106, the incremental operation record set may be synchronized between databases of a same type with reference to descriptions in FIG. 3.

In some embodiments, the synchronization manager 104 may implement database-level synchronization between the source database 102 and the target database 106. For example, all incremental logs in the source database 102 form an incremental operation record set, and then the incremental operation record set is sent to the target database for execution. Alternatively or additionally, when a type of the source database 102 is the same as or different from a type of the target database 106, database-level synchronization may be performed. In some embodiments, the synchronization manager 104 may implement data table-level synchronization between the source database 102 and the target database 106. In this case, only an incremental operation record for a target data table is sent to the target database. In an example, when the incremental log is obtained from the source database 102, filtering is performed. Only the incremental operation record for the target data table in the incremental log is used to form an incremental operation record set, and then the incremental operation record set is sent to the target database for execution. In another example, all incremental logs are received from the source database 102 to form an incremental operation record set, and then the incremental operation record set is stored in the synchronization manager. When an operation record in the incremental operation record set in the synchronization manager is sent to the target database, an incremental operation record related to the target data table is selected and sent to the target database for execution. Alternatively or additionally, when a type of the source database 102 is the same as or different from a type of the target database 106, data table-level incremental operation record synchronization may be performed. The foregoing examples are merely used to describe this disclosure, but are not specific limitations on this disclosure.

In this manner, during synchronization of an incremental operation record set, it is ensured that both the record set and an incremental operation record set that is before the incremental operation record set are synchronized to the target database, so that during incremental operation record set synchronization in real time, there are capabilities of quickly discovering a synchronization exception according to a consistency validation method and automatically recovering data that has a synchronization exception, to resolve an exception like a rollback that occurs in the database, ensure accurate synchronization of an operation and data between databases, and improve user experience. Further, in embodiments of this application, the incremental operation record set may be further synchronized between databases of different types, thereby implementing a solution of data synchronization between a plurality of databases of different types.

The foregoing describes, with reference to FIG. 1, the diagram of the example environment 100 in which embodiments of this application can be implemented. The following describes, with reference to FIG. 2, an example 200 for synchronizing an incremental operation record set according to some embodiments of this application. As shown in FIG. 2, a synchronization manager 204 is connected to one source database 202 and two target databases 206 and 208, and is configured to synchronize an incremental operation record set obtained from the source database 202 to the target databases 206 and 208. FIG. 2 is merely an example, and is not a specific limitation to this disclosure. The synchronization manager 204 may synchronize an incremental operation record set between any quantity of source databases and target databases.

As shown in FIG. 2, the source database 202 and the target databases 206 and 208 may be databases of different types, or may be databases of a same type. A parser 230 for the source database 202 is configured in the synchronization manager 204. When there are a plurality of source databases, each source database may correspond to one parser. The parser 230 may obtain an incremental log from the source database 202, and then may generate a source-format incremental operation record set by using the incremental log in the source database 202, for example, directly reads, as a source-format incremental operation record set, source-format incremental operation records from a plurality of obtained incremental logs. The parser 230 may further convert the source-format incremental operation record set into an intermediate-format incremental operation record set. In some embodiments, the parser 230 converts the source-format incremental operation record set into a Json-format incremental operation record set. In some embodiments, the parser 230 converts the source-format incremental operation record set into an incremental operation record set in any suitable format that may serve as an intermediate format. The foregoing examples are merely used to describe this disclosure, but are not specific limitations on this disclosure.

As shown in FIG. 2, the parser 230 stores obtained incremental operation record sets in the synchronization manager 204 in a chronological order, to form a plurality of incremental operation record sets arranged in a chronological order, for example, an incremental operation record set t1 210, an incremental operation record set t2 212, an incremental operation record set t3 214, an incremental operation record set t4 216, an incremental operation record set t5 218, an incremental operation record set t6 220, an incremental operation record set t7 222, and an incremental operation record set t8 224. After a new incremental operation record set is received and undergoes format conversion, an incremental operation record set t9 226 is generated. Additionally, after generating an intermediate-format incremental operation record set by using the parser 230 that matches the source database 202, the synchronization manager 204 further generates a validation code corresponding to each incremental operation record set, to validate the incremental operation record set.

The plurality of incremental operation record sets arranged in the chronological order are sent, by using adapters that match types of target databases, to the corresponding target databases for execution, to synchronize the incremental operation record sets. As shown in FIG. 2, for the target database 206, an incremental operation record in the incremental operation record set is obtained by using an adapter 232; and for the target database 208, an incremental operation record in the incremental operation record set is obtained by using an adapter 234.

The target database 206 is used as an example. When an incremental operation record in the to-be-processed incremental operation record set t4 216 is to be sent to the target database 206, the adapter 232 obtains a comparison validation code from the target database 206. The comparison validation code is stored in the target database 206, and is a validation code of a latest incremental operation record set that has been successfully synchronized to the target database 206. Then, the synchronization manager 204 searches for, in a validation code of an incremental operation record set that is before the operation record set t4 216, a validation code that is the same as the comparison validation code, for example, traverses a group of validation codes of incremental operation record sets that are before the incremental operation record set t4 216, and compares the comparison validation code with each validation code in the group of validation codes. If the validation code that is the same as the comparison validation code is found, an incremental operation record set that is after a target incremental operation record set corresponding to the validation code is synchronized to the target database. In an example, if all incremental operation record sets are stored in the synchronization manager 204, the synchronization manager 204 searches for, from validation codes of all incremental operation record sets that are before the incremental operation record set t4 216, the validation code that is the same as the comparison validation code. Because the validation codes of all the incremental operation record sets are stored in the synchronization manager 204, the validation code that is the same as the comparison validation code can be found. In another example, if a sequence of the incremental operation record sets stored in the synchronization manager 204 is a plurality of incremental operation record sets in a sliding time window, the synchronization manager 204 searches for, from a validation code of at least one incremental operation record set that is in the sliding time window and that is before the operation record set t4 216, the validation code that is the same as the comparison validation code. If the corresponding validation code is found, an incremental operation record set that is after a target incremental operation record set corresponding to the validation code is synchronized to the target database. Additionally, if no validation code that is the same as the comparison validation code is found in validation codes of the plurality of incremental operation record sets in the sliding time window, all incremental operation records in the source database are sent to the target database for execution.

The adapter 232 may convert an incremental operation record in the intermediate-format incremental operation record set into a target-format incremental operation record applicable to the target database 206, and then send the target-format incremental operation record to the target database 206 for execution. In some embodiments, the parser may further include a function of the adapter, and similarly, the adapter may also include a function of the parser, to synchronize an incremental operation record set in the target database to the source database.

The synchronization manager 204 shown in FIG. 2 may implement database-level incremental operation record set synchronization between the source database 202 and the target database 206, and may also implement data table-level incremental operation record synchronization. In some embodiments, the parser 230 obtains a source-format incremental operation record set from the incremental log in the source database 202, and then converts the source-format incremental operation record set into an intermediate-format incremental operation record set. When synchronization is performed to the target database 206, the adapter 232 is configured to: convert the incremental operation record set into a target-format incremental operation record set and send the target-format incremental operation record set to the target database 206 for execution. In some embodiments, the synchronization manager 204 implements data table-level incremental operation record set synchronization on a parser 230 side. For example, after the incremental log is obtained from the source database 202, incremental operation records in the incremental log are filtered based on an identifier of a target data table, and only an incremental operation record corresponding to the target data table forms a source-format incremental operation record set, and then conversion is performed to form an intermediate-format incremental operation record set. During processing, the adapter 232 converts the intermediate-format incremental operation record set into a target-format incremental operation record set, and then sends the target-format incremental operation record set to the target database for execution. In some embodiments, the synchronization manager 204 implements data table-level incremental operation record set synchronization on an adapter 232 side. For example, after obtaining the incremental log, the parser 230 forms a source-format incremental operation record set based on all incremental operation records in the incremental log, and then converts the source-format incremental operation record set into an intermediate-format incremental operation record set. The adapter 232 may be configured by a user to filter intermediate-format incremental operation records for one or more target data tables from the incremental operation record set, for example, perform filtering based on the identifier of the target data table. The adapter 232 converts only a selected intermediate-format incremental operation record into a target-format incremental operation record, and then sends the target-format incremental operation record to the target database for execution. Alternatively, the adapter 232 may first convert the intermediate-format incremental operation record set into a target-format incremental operation record set. Then, an incremental operation record for one or more target data tables is then selected to be sent to the target database for execution. The foregoing examples are merely used to describe this disclosure, but are not specific limitations on this disclosure.

Alternatively or additionally, after the incremental operation record set or the incremental operation record corresponding to the target data table is sent to the target database, if all the incremental operation records are successfully executed in the target database, the synchronization manager obtains, from the target database, a response that an operation corresponding to the incremental operation record is successfully performed in the target database. Then, the synchronization manager 204 sends a validation code of the incremental operation record set to the target database for storage.

In this manner, during synchronization of an incremental operation record set, it is ensured that both the record set and an incremental operation record set that is before the incremental operation record set are synchronized to the target database, so that during incremental operation record set synchronization in real time, there are capabilities of quickly discovering a synchronization exception according to a consistency validation method and automatically recovering data that has a synchronization exception, to resolve an exception like a rollback that occurs in the database, ensure accurate synchronization of an operation and data between databases, and improve user experience. Further, the incremental operation record set may be further synchronized between databases of different types, thereby implementing a solution of data synchronization between a plurality of databases of different types.

The foregoing describes, with reference to FIG. 2, the example for synchronizing the incremental operation record set according to some embodiments of this application. The following describes, with reference to FIG. 3, another example 300 for synchronizing an incremental operation record set according to some embodiments of this application. As shown in FIG. 3, a synchronization manager 304 is connected to a source database 302 and a target database 306, and is configured to synchronize an incremental operation record set between the source database 302 and the target database 306. In FIG. 3, the source database 302 and the target database 306 are databases of a same type. Therefore, the synchronization manager 304 may not need to adjust a format of an incremental operation record set from the source database 302, but may directly store the incremental operation record set in a local storage device of the synchronization manager. The synchronization manager 304 shown in FIG. 3 is connected to one source database 302 and one target database 306. This is merely an example, but is not a specific limitation on this disclosure. The synchronization manager 304 may connect to a plurality of source databases and target databases of a same type.

As shown in FIG. 3, the synchronization manager 304 stores an incremental operation record set t1 308, an incremental operation record set t2 310, an incremental operation record set t3 312, an incremental operation record set t4 314, an incremental operation record set t5 316, an incremental operation record set t6 318, an incremental operation record set t7 320, and an incremental operation record set t8 322 that are arranged in a chronological order. An incremental operation record set t9 324 is an incremental operation record set that is being obtained from the source database 302. Because a type of the source database 302 is the same as a type of the target database 306, the synchronization manager may not need to adjust a format of an incremental operation record in an incremental log obtained from the source database 302, and store, in the synchronization manager 304, the incremental operation record set t9 324 generated based on an obtained latest incremental log. The synchronization manager 304 further generates a validation code for the incremental operation record set t9 324. Alternatively or additionally, the synchronization manager 304 may further set one parser for each source database, and the parser is only configured to: obtain an incremental operation record set from the source database 302, and then store the obtained incremental operation record set in a local memory of the synchronization manager.

Ordered incremental operation record sets stored in the synchronization manager 304 may be synchronized to the target database 306. When synchronizing the incremental operation record set to the target database, the synchronization manager 304 needs to first determine a target incremental operation record set that has been successfully synchronized to the target database 306 and that is before the to-be-synchronized incremental operation record set. Then, an incremental operation record set that is after the target incremental operation record set is synchronized to the target database. A manner of determining the target incremental operation record set is the same as the manner of determining the target incremental operation record set described in FIG. 2.

In some embodiments, the synchronization manager 304 may implement database-level incremental operation record synchronization. For example, the synchronization manager 304 obtains the incremental log from the source database 302, and then stores the obtained incremental log as an incremental operation record set in the local memory of the synchronization manager 304. Then, the synchronization manager 304 sends the locally stored incremental operation record set to the target database 306 for execution. In some embodiments, the synchronization manager 304 may implement data table-level incremental operation record synchronization. In one example, the synchronization manager 304 may implement the data table-level incremental operation record synchronization when obtaining the incremental operation record from the source database, to synchronize only some incremental operation records for a data table. For example, the synchronization manager 304 obtains the incremental log from the source database, and then obtains, based on an identifier of a data table (that is, a target data table) that needs to be synchronized, an incremental operation record corresponding to the data table from the obtained incremental log, to generate an incremental operation record set. In another example, when the incremental operation record set locally stored in the synchronization manager 304 is synchronized to the target database, the data table-level incremental operation record synchronization may be implemented. For example, the synchronization manager 304 may obtain an incremental operation record for a target data table from the to-be-synchronized incremental operation record set, for example, obtain, from the stored incremental operation record set based on an identifier of the target data table, an incremental operation record related to the target data table. Then, the obtained incremental operation record related to the target data table is sent to the target database for execution.

Alternatively or additionally, after the incremental operation record set or the incremental operation record related to the target data table is sent to the target database, if an incremental operation corresponding to the incremental operation record is successfully performed in the target database, a response that the operation corresponding to the incremental operation record is successfully performed is returned to the synchronization manager. Then, the synchronization manager 304 sends a validation code of the incremental operation record set to the target database for storage.

In this manner, in embodiments of this application, during synchronization of a latest incremental operation record set, it can be ensured that both the latest incremental operation record set and an incremental operation record set that is before the latest incremental operation record set are synchronized to the target database, so that during incremental operation record set synchronization in real time, there are capabilities of quickly discovering a synchronization exception according to a consistency validation method and automatically recovering data that has a synchronization exception, and an incremental operation record set in the target database can be recovered or restored in time, to resolve an exception like a rollback that occurs in the database, ensure an operation between databases and data synchronization, and improve user experience.

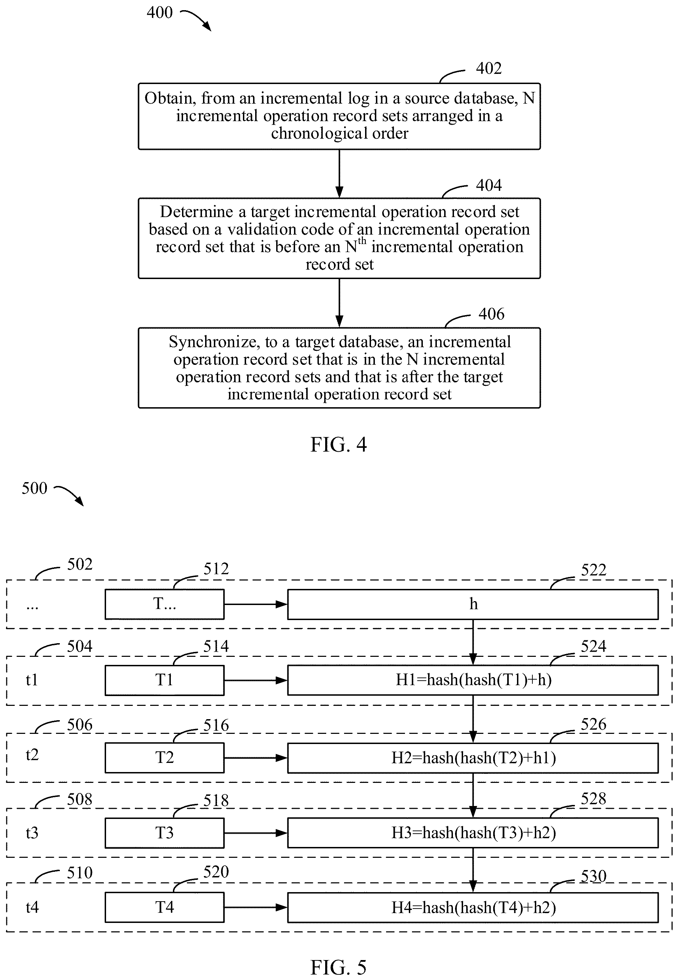

The foregoing describes the examples for synchronizing the incremental operation record set with reference to FIG. 2 and FIG. 3. The following describes a schematic flowchart of a data synchronization method according to some embodiments of this application with reference to FIG. 4. The method shown in FIG. 4 may be performed by the synchronization manager 104 in FIG. 1 or any suitable computing device. The data synchronization method shown in FIG. 4 is applied to a database system, and the database system includes a source database and a target database.

Block 402: Obtain, from an incremental log in the source database, N incremental operation record sets arranged in a chronological order, where N is an integer greater than 1, and an N^{th} incremental operation record set is a current to-be-synchronized incremental operation record set. For example, in FIG. 1, the synchronization manager 104 obtains incremental operation record sets from the incremental log in the source database 102, and arranges the incremental operation record sets in the chronological order. As described above, the synchronization manager 104 may obtain the incremental operation record sets from the source database at a specific time interval. Correspondingly, the N incremental operation record sets may be obtained in N times. The N^{th} incremental operation record set is a to-be-synchronized incremental operation record set for the target database, and a synchronization operation has been performed previously on an incremental operation record set that is before the N^{th} incremental operation record set for the target database. For example, in FIG. 2, a current to-be-synchronized incremental operation record set for the target database 206 is the incremental operation record set t4 216. In this case, N incremental operation record sets arranged in a chronological order are the incremental operation record set t1 210, the incremental operation record set t2 212, the incremental operation record set t3 214, and the incremental operation record set t4 216. N incremental operation record sets for the target database 208 are the incremental operation record set t1 210, the incremental operation record set t2 212, the incremental operation record set t3 214, the incremental operation record set t4 216, the incremental operation record set t5 218, and the incremental operation record set t6 220.

In some embodiments, the synchronization manager further generates corresponding validation codes for the N incremental operation record sets. For example, the synchronization manager may generate a validation code of the N^{th} incremental operation record set based on a validation code of an (N-1)^{th} incremental operation record set and the N^{th} incremental operation record set. In an example, the synchronization manager obtains a hash value by performing a hash operation on an incremental operation record set, where the hash value serves as a validation code of the incremental operation record set. For example, an MD5 algorithm, a SHA-1 algorithm, or the like is used. The following describes a method for obtaining the hash value of the incremental operation record set with reference to FIG. 5. In another example, the synchronization manager obtains the validation code of the incremental operation record set by performing any suitable operation on the incremental operation record set. The foregoing examples are merely used to describe this disclosure, but are not specific limitations on this disclosure.

In some embodiments, a type of the source database is different from a type of the target database. To ensure that an incremental operation record in the incremental log from the source database can be executed in the target database, a parser is set for the source database in the synchronization manager, where the parser may match a type of the incremental log in the source database and read a source-format incremental operation record. Then, an N^{th} source-format incremental operation record set is obtained from the incremental log in the source database by using the parser that matches the source database. For example, the parser reads an incremental operation record from the incremental log in the source database based on a data sequence number or a timestamp, to generate a source-format incremental operation record set. Then, the N^{th} source-format incremental operation record set is converted into an N^{th} intermediate-format incremental operation record set. Therefore, the N incremental operation record sets stored in the synchronization manager are N intermediate-format incremental operation record sets, and are arranged in a chronological order. Alternatively or additionally, when a type of the source database is the same as a type of the target database, a source-format incremental operation record set from the source database may alternatively be converted into an intermediate-format incremental operation record set.

In some embodiments, when the type of the source database is the same as the type of the target database, format conversion may not need to be performed on the source-format incremental operation record set from the source database, and the source-format incremental operation record set may be directly stored in the synchronization manager.

In some embodiments, that the synchronization manager obtains, from the incremental log in the source database, the N incremental operation record sets arranged in the chronological order is for the entire source database. In some embodiments, when obtaining, from the incremental log in the source database, the N incremental operation record sets arranged in the chronological order, the synchronization manager may obtain only some incremental operation records for a data table. The synchronization manager may obtain, from the incremental log in the source database based on an identifier of a to-be-synchronized target data table, the N incremental operation record sets that correspond to the target data table and that are arranged in the chronological order. Alternatively or additionally, regardless of whether the type of the source database is the same as the type of the target database, only data table-level synchronization may be performed. The foregoing examples are merely used to describe this disclosure, but are not specific limitations on this disclosure.

Block 404: Determine a target incremental operation record set based on a validation code of an incremental operation record set that is before the N^{th} incremental operation record set, where the target incremental operation record set is an incremental operation record set that is successfully synchronized to the target database last time. As shown in FIG. 2, when being to synchronize the incremental operation record set t4 216 to the target database, the synchronization manager 204 needs to determine, from the incremental operation record sets that are before the incremental operation record set t4 216, an incremental operation record set that is successfully synchronized to the target database last time. The determining process is implemented based on validation codes of the incremental operation record sets.

In some embodiments, when determining the target incremental operation record set, the synchronization manager 204 obtains a comparison validation code from the target database, where the comparison validation code is stored in the target database and is a validation code of a latest incremental operation record set that has been successfully synchronized to the target database. Usually, after an incremental operation record in an incremental operation record set is sent to the target database and is executed, the synchronization manager 204 receives, from the target database, a response that the incremental operation record is successfully executed. After receiving a response that a last incremental operation record is successfully executed, the synchronization manager further sends a validation code of the incremental operation record set to the target database. The validation code is stored in a preset location of the target database for ease of search. For example, a table for a patent is set to store the validation code. The target database may be a distributed database, and includes a primary database and a secondary database. Usually, when the primary database successfully receives an incremental operation record set that is successfully sent by the synchronization manager 204 and a validation code corresponding to the incremental operation record set, the incremental operation record set and the validation code corresponding to the incremental operation record set are first stored in the primary database, and then delivered to the secondary database. Because it takes time to be delivered to the secondary database, the incremental operation record set and the validation code corresponding to the incremental operation record set that are received from the synchronization manager to the primary repository may have not been sent to the secondary database. In this case, if the primary database is faulty, the secondary database is adjusted to the primary database. The secondary database does not receive an incremental operation record set that is successfully delivered to the previous primary database last time and a validation code corresponding to the incremental operation record set. Consequently, in this case, an incremental operation record set and a validation code of the incremental operation record set that are successfully stored in the target database last time are not the latest incremental operation record set that is successfully sent by the synchronization manager 204 and the validation code corresponding to the incremental operation record set. In this case, a rollback occurs in the target database. To avoid a problem caused by the rollback in the target database, the synchronization manager searches for a validation code that is the same as the comparison validation code in the validation code of the incremental operation record set that is before the N^{th} incremental operation record set. If the validation code that is the same as the comparison validation code is found, an incremental operation record set corresponding to the validation code is determined as the target incremental operation record set. In an example, before being to send an incremental operation record in a new incremental operation record set to the target database, the synchronization manager 204 may send, to the target database by using an adapter 232, a request for obtaining a validation code of a latest incremental operation record set that is successfully synchronized to the target database, and then receive the comparison validation code from the target database.

Block 406: Synchronize, to the target database, an incremental operation record set that is in the N incremental operation record sets and that is after the target incremental operation record set. As shown in FIG. 2, for the target database 206, when being to synchronize the incremental operation record set t4 216, if determining that the incremental operation record set t3 214 is the target incremental operation record set, the synchronization manager 204 synchronizes the incremental operation record set t4 216 to the target database 206. If determining that the incremental operation record set t2 212 is the target incremental operation record set, the synchronization manager 204 synchronizes the incremental operation record set t3 214 and the incremental operation record set t4 216 to the target database 206.

In some embodiments, an adapter that matches the type of the target database is set in the synchronization manager. When the incremental operation record set is synchronized to the target database, the N^{th} intermediate-format incremental operation record set is converted into an N^{th} target-format incremental operation record set by using the adapter that matches the type of the target database. Then, the synchronization manager sends the N^{th} target-format incremental operation record set to the target database, for causing the target database to perform an incremental operation corresponding to the N^{th} target-format incremental operation record set. For example, when the type of the source database is different from the type of the target database, the synchronization manager converts, into an intermediate-format incremental operation record set for storage, the source-format incremental operation record set obtained from the source database. Then, when the incremental operation record set stored in the synchronization manager is sent to the target database for execution, the intermediate-format incremental operation record set is then converted into a target-format incremental operation record set that may be used in the target database. Alternatively or additionally, when a format of the source database is the same as a format of the target database, the source-format incremental operation record set obtained from the source database may alternatively be converted into the intermediate-format incremental operation record set. Then, for sending to the target database, the intermediate-format incremental operation record set is then converted into a target-format incremental operation record set corresponding to the target database.

In some embodiments, when the source database and the target database are databases of a same type, format conversion may not be performed on the incremental operation record set obtained from the source database, and the incremental operation record set is directly stored in the synchronization manager. In this case, when the incremental operation set is synchronized to the target database, the N^{th} incremental operation record set is directly sent to the target database, for causing the target database to perform an incremental operation corresponding to the N^{th} incremental operation record set.

In some embodiments, the incremental operation record in the incremental operation record set stored in the synchronization manager may be synchronized to the target database. In some embodiments, when the incremental operation record set is synchronized to the target database, data table-level synchronization may be performed. For example, the synchronization manager selects, from the N^{th} intermediate-format incremental operation record set based on the identifier of the target data table, an intermediate-format incremental operation record related to the target data table. Then, the synchronization manager converts, into a target-format incremental operation record related to the target data table, the intermediate-format incremental operation record related to the target data table. The synchronization manager sends, to the target database, the target-format incremental operation record related to the target data table, for causing the target database to perform an incremental operation corresponding to the target-format incremental operation record related to the target data table.

In some embodiments, when the incremental operation record set is synchronized to the target database, the synchronization manager selects, from the N^{th} incremental operation record set based on the identifier of the target data table, an incremental operation record related to the target data table. Then, the synchronization manager sends, to the target database, the incremental operation record related to the target data table, for causing the target database to perform an incremental operation corresponding to the incremental operation record related to the target data table. For example, when the type of the target database is the same as the type of the source database, because the incremental operation record set from the source database is directly stored in the synchronization manager, when the incremental operation record set is sent to the target database, filtering is directly performed based on the identifier of the target data table.

In some embodiments, the validation code of the N^{th} incremental operation record set is sent to the target database after it is determined that the N^{th} incremental operation record set has been successfully synchronized to the target database, where the validation code of the N^{th} incremental operation record set is used to be stored in the target database.

In this manner, in embodiments of this application, during synchronization of the N^{th} incremental operation record set, it can be ensured that both the Nth incremental operation record set and the incremental operation record set that is before the Nth incremental operation record set are synchronized to the target database, so that during incremental operation record set synchronization in real time, there are capabilities of quickly discovering a synchronization exception according to a consistency validation method and automatically recovering data that has a synchronization exception, and an incremental operation record set in the target database can be recovered or restored in time, to resolve an exception like a rollback that occurs in the database, ensure an operation between databases and data synchronization, and improve user experience. Further, in embodiments of this application, the incremental operation record set may be further synchronized between databases of different types, thereby implementing a solution of data synchronization between a plurality of databases of different types.

The foregoing describes the schematic flowchart of the data synchronization method according to embodiments of this application with reference to FIG. 4. The following describes, with reference to FIG. 5, an example 500 for generating a hash value of an incremental operation record set according to some embodiments of this application. As shown in FIG. 5, when obtaining an incremental operation record set from a source database, a synchronization manager calculates a hash value of a current newly-added incremental operation record set by calculating hash field of a current incremental operation record set and a hash field of a latest incremental operation record set. As shown in FIG. 5, at a moment 502 before t1, there is a corresponding incremental operation record set T 512 and a hash value h 522 corresponding to the incremental operation record set T 512. Then, at a moment t1 504, the synchronization manager receives an incremental operation record set T1 514, and calculates a hash value H1 corresponding to the incremental operation record set T1 514 by using a formula H1=hash(hash(T1)+h) shown in a block 524. In the calculation process, the synchronization manager first calculates an intermediate hash value of the incremental operation record set T1 514, and then performs a hash operation on the intermediate hash value and a hash value of a previous incremental operation record set, to obtain the hash value for the incremental operation record set T1 514. Then, an incremental operation record set T2 516 is obtained at a moment t2 506, and a hash value of T2 516 is calculated by using a formula H2=hash(hash(T2)+h1) in a block 526. An incremental operation record set T3 518 is obtained at a moment t3 508, and then a hash value of the incremental operation record set T3 518 is calculated by using a formula H3=hash(hash(T3)+h2) in a block 528. An incremental operation record set T4 520 is obtained at a moment t4 510, and then a hash value of the incremental operation record set T4 520 is calculated by using a formula H4=hash(hash(T4)+h2) in a block 530.

When synchronization is started, extra compatibility needs to be performed on a 1^{st} piece of synchronized data. This is because data that is before the incremental operation record set has no hash value. For example, a hash operation is performed on an initial incremental operation record set to obtain a hash value for the initial incremental operation record set. In this manner, in this embodiment of this application, a suitable hash value can be quickly and accurately calculated.

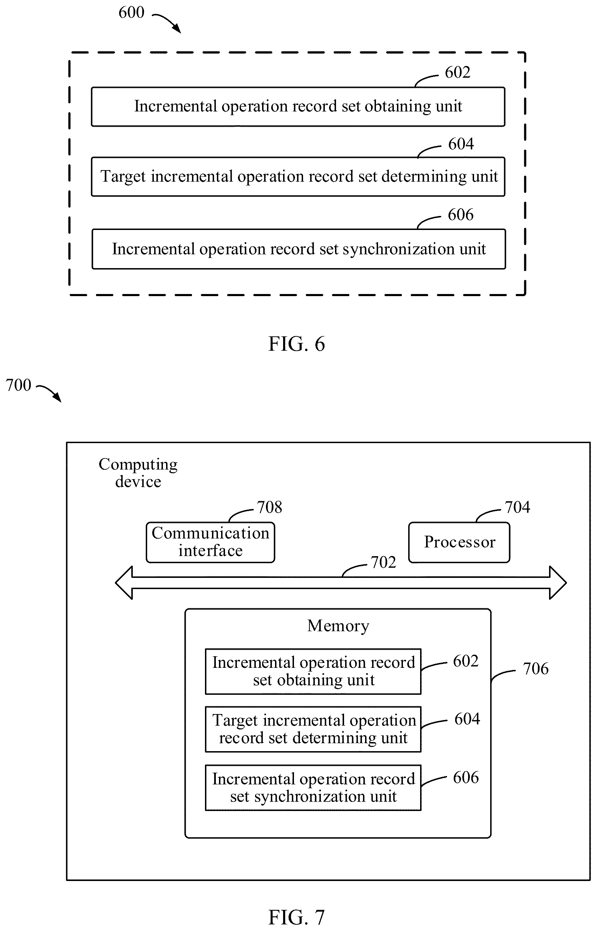

FIG. 6 further shows a data synchronization apparatus 600 according to embodiments of this application. The data synchronization apparatus 600 is used in a database system, and the database system includes a source database and a target database. The data synchronization apparatus 600 may include a plurality of modules, configured to perform the corresponding steps in the method 400 discussed in FIG. 4. The data synchronization apparatus 600 includes: an incremental operation record set obtaining unit 602, configured to obtain, from an incremental log in a source database, N incremental operation record sets arranged in a chronological order, where N is an integer greater than 1, and an N^{th} incremental operation record set is a current to-be-synchronized incremental operation record set; a target incremental operation record set determining unit 604, configured to determine a target incremental operation record set based on a validation code of an incremental operation record set that is before the N^{th} incremental operation record set, where the target incremental operation record set is an incremental operation record set that is successfully synchronized to a target database last time; and an incremental operation record set synchronization unit 606, configured to synchronize, to the target database, an incremental operation record set that is in the N incremental operation record sets and that is after the target incremental operation record set.

In some embodiments, the data synchronization apparatus 600 further includes: a validation code generation unit, configured to generate a validation code of the N^{th} incremental operation record set; and a validation code sending unit, configured to send the validation code of the N^{th} incremental operation record set to the target database after it is determined that the N^{th} incremental operation record set has been successfully synchronized to the target database, where the validation code of the N^{th} incremental operation record set is used to be stored in the target database.

In some embodiments, the target incremental operation record set determining unit 604 includes: a comparison validation code obtaining unit, configured to obtain a comparison validation code from the target database, where the comparison validation code is stored in the target database and is a validation code of a latest incremental operation record set that has been successfully synchronized to the target database; and a validation code searching unit, configured to: search for a validation code that is the same as the comparison validation code and that is in the validation code of the incremental operation record set that is before the N^{th} incremental operation record set, and determine the target incremental operation record set, where the validation code of the target incremental operation record set is the same as the comparison validation code.

In some embodiments, a type of the source database is different from a type of the target database, the N incremental operation record sets are N intermediate-format incremental operation record sets, and the incremental operation record set obtaining unit 602 includes: a parser-based incremental operation record set obtaining unit, configured to obtain an N^{th} source-format incremental operation record set from the incremental log in the source database by using a parser that matches the type of the source database; and a first incremental operation record set conversion unit, configured to convert the N^{th} source-format incremental operation record set into an N^{th} intermediate-format incremental operation record set.

In some embodiments, the incremental operation record set synchronization unit 606 includes: a second incremental operation record set conversion unit, configured to convert the N^{th} intermediate-format incremental operation record set into an N^{th} target-format incremental operation record set by using an adapter that matches the type of the target database; and an incremental operation record set sending unit, configured to send the N^{th} target-format incremental operation record set to the target database, for causing the target database to perform an incremental operation corresponding to the N^{th} target-format incremental operation record set.

In some embodiments, the incremental operation record set synchronization unit 606 includes: a first incremental operation record filtering unit, configured to select, from the N^{th} intermediate-format incremental operation record set based on an identifier of a target data table, an intermediate-format incremental operation record related to the target data table; a data table-based incremental operation record conversion unit, configured to convert, into a target-format incremental operation record related to the target data table, the intermediate-format incremental operation record related to the target data table; and a first incremental operation record sending unit, configured to send, to the target database, the target-format incremental operation record related to the target data table, for causing the target database to perform an incremental operation corresponding to the target-format incremental operation record related to the target data table.

In some embodiments, the incremental operation record set obtaining unit 602 includes: a data table-based incremental operation record set obtaining unit, configured to obtain, from the incremental log in the source database based on an identifier of a target data table, the N incremental operation record sets arranged in the chronological order.

In some embodiments, the incremental operation record set synchronization unit 606 includes: a second incremental operation record filtering unit, configured to select, from the N^{th} incremental operation record set based on an identifier of a target data table, an incremental operation record related to the target data table; and a second incremental operation record sending unit, configured to send, to the target database, the incremental operation record related to the target data table, for causing the target database to perform an incremental operation corresponding to the incremental operation record related to the target data table.

In some embodiments, the incremental operation record set synchronization unit 606 includes: a target database synchronization unit, configured to send the N^{th} incremental operation record set to the target database, for causing the target database to perform an incremental operation corresponding to the N^{th} incremental operation record set.

In some embodiments, the validation code generation unit includes: an incremental operation record set validation code generation unit, configured to generate the validation code of the N^{th} incremental operation record set based on a validation code of an (N-1)^{th} incremental operation record set and the N^{th} incremental operation record set.

A unit included in the data synchronization apparatus serves as an example of a software functional unit, and the data synchronization apparatus may include code that is run on a computing instance. The computing instance may be at least one of computing devices such as a physical host (computing device), a virtual machine, and a container. Further, there may be one or more computing devices. For example, the data synchronization apparatus may include code run on a plurality of hosts/virtual machines/containers. It should be noted that the plurality of hosts/virtual machines/containers configured to run the application program may be distributed in a same region (region), or may be distributed in different regions. Further, the plurality of hosts/virtual machines/containers configured to run the code may be distributed in a same availability zone (availability zone, AZ), or may be distributed in different AZs. Each AZ includes one data center or a plurality of data centers that are geographically close to each other. Usually, one region may include a plurality of AZs.

Similarly, the plurality of hosts/virtual machines/containers configured to run the code may be distributed in a same virtual private cloud (virtual private cloud, VPC), or may be distributed in a plurality of VPCs. Usually, one VPC is disposed in one region. A communication gateway needs to be disposed in each VPC for communication between two VPCs in a same region and cross-region communication between VPCs in different regions. The VPCs are interconnected through the communication gateway.

The unit serves as an example of a hardware functional unit, and the data synchronization apparatus and/or the synchronization manager may include at least one computing device, for example, a server. Alternatively, each unit of the data synchronization apparatus and/or the synchronization manager may be a device implemented by using an application-specific integrated circuit (application-specific integrated circuit, ASIC) or a programmable logic device (programmable logic device, PLD), or the like. The PLD may be implemented by using a complex programmable logic device (complex programmable logic device, CPLD), a field-programmable gate array (field-programmable gate array, FPGA), a generic array logic (generic array logic, GAL), or any combination thereof.

A plurality of computing devices included in the data synchronization apparatus and/or the synchronization manager may be distributed in a same region, or may be distributed in different regions. A plurality of computing devices included in the data synchronization apparatus and/or the synchronization manager may be distributed in a same AZ, or may be distributed in different AZs. Similarly, a plurality of computing devices included in the data synchronization apparatus and/or the synchronization manager may be distributed in a same VPC, or may be distributed in a plurality of VPCs. The plurality of computing devices may be any combination of computing devices such as a server, an ASIC, a PLD, a CPLD, an FPGA, and GAL.

An embodiment of this disclosure further provides a computing device 700. FIG. 7 is a block diagram of an example device that may be used to implement an example implementation of this disclosure. As shown in FIG. 7, the computing device 700 includes a bus 702, a processor 704, a memory 706, and a communication interface 708. The processor 704, the memory 706, and the communication interface 708 communicate with each other through the bus 702. The computing device 700 may be a server or a terminal device. It should be understood that a quantity of processors and a quantity of memories in the computing device 700 are not limited in this application. The bus 702 may be a peripheral component interconnect (peripheral component interconnect, PCI) bus, an extended industry standard architecture (extended industry standard architecture, EISA) bus, or the like. Buses may be classified into an address bus, a data bus, a control bus, and the like. For ease of representation, only one line is used for representation in FIG. 7, but it does not indicate that there is only one bus or only one type of bus. The bus 702 may include a path for information transmission between components (for example, the memory 706, the processor 704, and the communication interface 708) of the computing device 700. The processor 704 may include any one or more of processors such as a central processing unit (central processing unit, CPU), a graphics processing unit (graphics processing unit, GPU), a microprocessor (microprocessor, MP), or a digital signal processor (digital signal processor, DSP). The memory 706 may include a volatile memory (volatile memory), for example, a random access memory (random access memory, RAM). The processor 704 may further include a non-volatile memory (non-volatile memory), for example, a read-only memory (read-only memory, ROM), a flash memory, a hard disk drive (hard disk drive, HDD), or a solid-state drive (solid-state drive, SSD). The memory 706 stores executable program code, and the processor 704 executes the executable program code to separately implement the methods of the incremental operation record set obtaining unit 602, the target incremental operation record set determining unit 604, and the incremental operation record set synchronization unit 606 in the foregoing embodiments of this disclosure. That is, the memory 706 may store instructions used for the method and the function in any one of the foregoing embodiments. The communication interface 708 uses a transceiver module, for example, but not limited to, a network interface card or a transceiver, to implement communication between the computing device 700 and another device or a communication network.

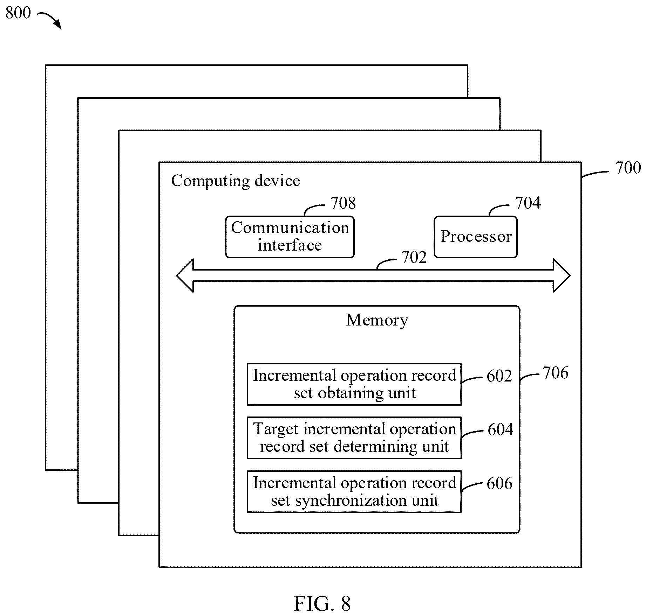

An embodiment of this disclosure further provides a computing device cluster 800. FIG. 8 is a block diagram of an example device cluster that may be used to implement an example implementation of this disclosure. The synchronization manager according to embodiments of this disclosure is deployed on the computing device cluster 800, and the computing device cluster 800 includes at least one computing device 700. In some embodiments, the computing device cluster 800 may include one computing device 700 to implement all or a part of the synchronization manager in embodiments of this disclosure. In some embodiments, the computing device cluster 800 may include a plurality of computing devices 700, and the plurality of computing devices may implement all or a part of the synchronization manager in embodiments of this disclosure synchronously or asynchronously, serially or in parallel, or independently or distributedly. The computing device 700 in the computing device cluster 800 may be a server, for example, a central server, an edge server, or a local server in a local data center. In some embodiments, the computing device may alternatively be a terminal device like a desktop computer, a notebook computer, or a smartphone. As shown in FIG. 8, the computing device cluster 800 includes at least one computing device 700. Memories 706 in one or more computing devices 700 in the computing device cluster 800 may store same instructions used to perform the method and the function in any one of the foregoing embodiments. In some possible implementations, memories 706 of one or more computing devices 700 in the computing device cluster 800 may alternatively separately store a part of instructions used to perform the method and the function in embodiments of this disclosure in any one of the foregoing embodiments. In other words, a combination of the one or more computing devices 700 may jointly execute instructions used for the method and the function in embodiments of this disclosure. It should be noted that memories 706 in different computing devices 700 in the computing device cluster may store different instructions, respectively used to perform some functions of the apparatus 600. To be specific, the instructions stored in the memories 706 in the different computing devices 700 may implement functions of one or more units or subunits of the incremental operation record set obtaining unit 602, the target incremental operation record set determining unit 604, and the incremental operation record set synchronization unit 606.

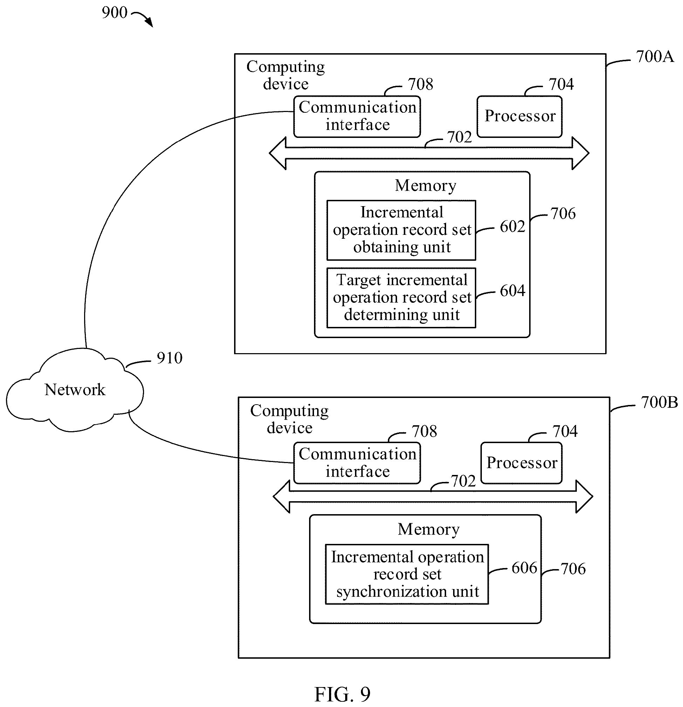

In some possible implementations, the one or more computing devices in the computing device cluster may be connected via a network. The network may be a wide area network, a local area network, or the like. FIG. 9 is a block diagram of another example device that may be used to implement an example implementation of this disclosure, where a possible implementation 900 is shown. As shown in FIG. 9, two computing devices 700A and 700B are connected via a network 910. A connection manner of a computing device cluster shown in FIG. 9 may be that, in consideration of the method in this application, a large amount of user data needs to be stored and intensive real-time or near-real-time calculation needs to be performed, and therefore, a part of a function is considered to be performed by the computing device 700B. It should be understood that functions of the computing device 700A shown in FIG. 9 may alternatively be completed by a plurality of computing devices 700. Similarly, functions of the computing device 700B may alternatively be completed by a plurality of computing devices 700.

An embodiment of this disclosure further provides a computer program product including instructions. The computer program product may be software or a program product that includes instructions and that can run on a computing device or that can be stored in any usable medium. When the computer program product runs on at least one computing device, the at least one computing device is caused to perform the method and the function in any one of the foregoing embodiments.

An embodiment of this disclosure further provides a computer-readable storage medium. The computer-readable storage medium may be any usable medium that can be accessed by a computing device, or a data storage device like a data center including one or more usable media. The usable medium may be a magnetic medium (for example, a floppy disk, a hard disk, or a magnetic tape), an optical medium (for example, a DVD), a semiconductor medium (for example, a solid-state drive), or the like. The computer-readable storage medium includes instructions, and the instructions indicate the computing device to perform the method and the function in any one of the foregoing embodiments.

Usually, various embodiments of this disclosure may be implemented by hardware or a dedicated circuit, software, logic, or any combination thereof. Some aspects may be implemented by hardware, and other aspects may be implemented by firmware or software, and may be executed by a controller, a microprocessor, or another computing device. Although various aspects of embodiments of this disclosure are shown and described as block diagrams, flowcharts, or some other figures for representation, it should be understood that the blocks, apparatuses, systems, technologies, or methods described in this specification may be implemented as, for example, nonlimiting examples, hardware, software, firmware, dedicated circuits or logic, general-purpose hardware, controllers, other computing devices, or a combination thereof.

This disclosure further provides at least one computer program product tangibly stored in a non-transitory computer-readable storage medium. The computer program product includes computer-executable instructions, for example, instructions included in a program module, which are executed in a device on a real or virtual target processor to perform the process/method as described above with reference to the accompanying drawings. Usually, the program module includes a routine, a program, a library, an object, a class, a component, a data structure, or the like that executes a specific task or implements a specific abstract data type. In various embodiments, functions of the program modules may be combined or split between the program modules as required. Machine-executable instructions for the program module may be executed locally or in a distributed device. In the distributed device, the program module may be locally located and located in a remote storage medium.

Computer program code for implementing the methods in this disclosure may be written in one or more programming languages. The computer program code may be provided for a processor of a general-purpose computer, a dedicated computer, or another programmable data processing apparatus, so that when the program code is executed by the computer or the another programmable data processing apparatus, functions/operations specified in the flowcharts and/or block diagrams are implemented. The program code may be executed entirely on a computer, partly on a computer, as a standalone software package, partly on a computer and partly on a remote computer, or entirely on a remote computer or a server.

In the context of this disclosure, the computer program code or related data may be carried in any suitable carrier, so that the device, the apparatus, or the processor can perform various processing and operations described above. Examples of the carrier include a signal, a computer-readable medium, and the like. Examples of the signal may include an electrical signal, an optical signal, a radio signal, a voice signal, or other forms of propagated signals, such as a carrier wave and an infrared signal.

The computer-readable medium may be any tangible medium that includes or stores programs used for or related to an instruction execution system, apparatus, or device, or a data storage device like a data center, including one or more usable media. The computer-readable medium may be a computer-readable signal medium or a computer-readable storage medium. The computer-readable medium may include but is not limited to an electronic, magnetic, optical, electromagnetic, infrared, or semiconductor system, apparatus or device, or any suitable combination thereof. More detailed examples of the computer-readable storage medium include an electrical connection with one or more wires, a portable computer disk, a hard disk, a random access memory (RAM), a read-only memory (ROM), an erasable programmable read-only memory (EPROM or a flash memory), an optical storage device, a magnetic storage device, or any suitable combination thereof.

In addition, although the operations of the methods in this disclosure are described in a particular order in the accompanying drawings, this does not require or imply that these operations need to be performed in the particular order, or that all the operations shown need to be performed to achieve the desired results. Instead, execution orders of the steps depicted in the flowcharts may change. Additionally or alternatively, some steps may be omitted, a plurality of steps may be combined into one step for execution, and/or one step may be broken down into a plurality of steps for execution. It should further be noted that, the features and functions of two or more apparatuses according to this disclosure may be specific in one apparatus. Instead, features and functions of one apparatus described above may be further specific in a plurality of apparatuses.

The foregoing has described various implementations of this disclosure. The foregoing descriptions are examples, are not exhaustive, and are not limited to the disclosed implementations. Although the present invention is described in detail with reference to the foregoing embodiments, a person of ordinary skill in the art should understand that the person of ordinary skill in the art may still make modifications to the technical solutions described in the foregoing embodiments or make equivalent replacements to a part of technical features thereof. However, these modifications or replacements do not make the essence of the corresponding technical solutions depart from the protection scope of the technical solutions of embodiments of the present invention. Many modifications and changes are clear to the person of ordinary skill in the art without departing from the scope and spirit of the described implementations. Selection of the terms used in this specification is intended to well explain principles of the implementations, actual applications, or improvements to technologies in the market, or to enable another person of ordinary skill in the art to understand the implementations disclosed in this specification.

## Claims

1. A data synchronization method, wherein the method is applied to a database system, the database system comprises a source database and a target database, and the method comprises:
obtaining, from an incremental log in the source database, N incremental operation record sets arranged in a chronological order, wherein N is an integer greater than 1, and an N^{th} incremental operation record set is a current to-be-synchronized incremental operation record set;
determining a target incremental operation record set based on a validation code of an incremental operation record set that is before the N^{th} incremental operation record set, wherein the target incremental operation record set is an incremental operation record set that is successfully synchronized to the target database last time; and
synchronizing, to the target database, an incremental operation record set that is in the N incremental operation record sets and that is after the target incremental operation record set.

2. The method according to claim 1, wherein the method further comprises:
generating a validation code of the N^{th} incremental operation record set; and
sending the validation code of the N^{th} incremental operation record set to the target database after it is determined that the N^{th} incremental operation record set has been successfully synchronized to the target database, wherein the validation code of the N^{th} incremental operation record set is used to be stored in the target database.

3. The method according to claim 1 or 2, wherein the determining the target incremental operation record set based on the validation code of the incremental operation record set that is before the N^{th} incremental operation record set comprises:
obtaining a comparison validation code from the target database, wherein the comparison validation code is stored in the target database and is a validation code of a latest incremental operation record set that has been successfully synchronized to the target database; and
searching for a validation code that is the same as the comparison validation code and that is in the validation code of the incremental operation record set that is before the N^{th} incremental operation record set, and determining the target incremental operation record set, wherein the validation code of the target incremental operation record set is the same as the comparison validation code.

4. The method according to any one of claims 1 to 3, wherein a type of the source database is different from a type of the target database, the N incremental operation record sets are N intermediate-format incremental operation record sets, and the obtaining, from the incremental log in the source database, the N incremental operation record sets arranged in the chronological order comprises:
obtaining an N^{th} source-format incremental operation record set from the incremental log in the source database by using a parser that matches the type of the source database; and
converting the N^{th} source-format incremental operation record set into an N^{th} intermediate-format incremental operation record set.

5. The method according to claim 4, wherein the synchronizing, to the target database, the incremental operation record set that is in the N incremental operation record sets and that is after the target incremental operation record set comprises:
converting the N^{th} intermediate-format incremental operation record set into an N^{th} target-format incremental operation record set by using an adapter that matches the type of the target database; and
sending the N^{th} target-format incremental operation record set to the target database, for causing the target database to perform an incremental operation corresponding to the N^{th} target-format incremental operation record set.

6. The method according to claim 4, wherein the synchronizing, to the target database, the incremental operation record set that is in the N incremental operation record sets and that is after the target incremental operation record set comprises:
selecting, from the N^{th} intermediate-format incremental operation record set based on an identifier of a target data table, an intermediate-format incremental operation record related to the target data table;
converting, into a target-format incremental operation record related to the target data table, the intermediate-format incremental operation record related to the target data table; and
sending, to the target database, the target-format incremental operation record related to the target data table, for causing the target database to perform an incremental operation corresponding to the target-format incremental operation record related to the target data table.

7. The method according to any one of claims 1 to 3, wherein the obtaining, from the incremental log in the source database, the N incremental operation record sets arranged in the chronological order comprises:
obtaining, from the incremental log in the source database based on an identifier of a target data table, the N incremental operation record sets arranged in the chronological order.

8. The method according to any one of claims 1 to 3, wherein the synchronizing, to the target database, the incremental operation record set that is in the N incremental operation record sets and that is after the target incremental operation record set comprises:
selecting, from the N^{th} incremental operation record set based on an identifier of a target data table, an incremental operation record related to the target data table; and
sending, to the target database, the incremental operation record related to the target data table, for causing the target database to perform an incremental operation corresponding to the incremental operation record related to the target data table.

9. The method according to claim 1, wherein the synchronizing, to the target database, the incremental operation record set that is in the N incremental operation record sets and that is after the target incremental operation record set comprises:
sending the N^{th} incremental operation record set to the target database, for causing the target database to perform an incremental operation corresponding to the N^{th} incremental operation record set.

10. The method according to claim 2, wherein the generating the validation code of the N^{th} incremental operation record set comprises:
generating the validation code of the N^{th} incremental operation record set based on a validation code of an (N-1)^{th} incremental operation record set and the N^{th} incremental operation record set.

11. A data synchronization apparatus, wherein the apparatus is used in a database system, the database system comprises a source database and a target database, and the data synchronization apparatus comprises:
an incremental operation record set obtaining unit, configured to obtain, from an incremental log in the source database, N incremental operation record sets arranged in a chronological order, wherein N is an integer greater than 1, and an N^{th} incremental operation record set is a current to-be-synchronized incremental operation record set;
a target incremental operation record set determining unit, configured to determine a target incremental operation record set based on a validation code of an incremental operation record set that is before the N^{th} incremental operation record set, wherein the target incremental operation record set is an incremental operation record set that is successfully synchronized to the target database last time; and
an incremental operation record set synchronization unit, configured to synchronize, to the target database, an incremental operation record set that is in the N incremental operation record sets and that is after the target incremental operation record set.

12. The data synchronization apparatus according to claim 11, wherein the data synchronization apparatus further comprises:
a validation code generation unit, configured to generate a validation code of the N^{th} incremental operation record set; and
a validation code sending unit, configured to send the validation code of the N^{th} incremental operation record set to the target database after it is determined that the N^{th} incremental operation record set has been successfully synchronized to the target database, wherein the validation code of the N^{th} incremental operation record set is used to be stored in the target database.

13. The data synchronization apparatus according to claim 11 or 12, wherein the target incremental operation record set determining unit comprises:
a comparison validation code obtaining unit, configured to obtain a comparison validation code from the target database, wherein the comparison validation code is stored in the target database and is a validation code of a latest incremental operation record set that has been successfully synchronized to the target database; and
a validation code searching unit, configured to: search for a validation code that is the same as the comparison validation code and that is in the validation code of the incremental operation record set that is before the N^{th} incremental operation record set, and determine the target incremental operation record set, wherein the validation code of the target incremental operation record set is the same as the comparison validation code.

14. The data synchronization apparatus according to any one of claims 11 to 13, wherein a type of the source database is different from a type of the target database, the N incremental operation record sets are N intermediate-format incremental operation record sets, and the incremental operation record set obtaining unit comprises:
a parser-based incremental operation record set obtaining unit, configured to obtain an N^{th} source-format incremental operation record set from the incremental log in the source database by using a parser that matches the type of the source database; and
a first incremental operation record set conversion unit, configured to convert the N^{th} source-format incremental operation record set into an N^{th} intermediate-format incremental operation record set.

15. The data synchronization apparatus according to claim 14, wherein the incremental operation record set synchronization unit comprises:
a second incremental operation record set conversion unit, configured to convert the N^{th} intermediate-format incremental operation record set into an N^{th} target-format incremental operation record set by using an adapter that matches the type of the target database; and
an incremental operation record set sending unit, configured to send the N^{th} target-format incremental operation record set to the target database, for causing the target database to perform an incremental operation corresponding to the N^{th} target-format incremental operation record set.

16. The data synchronization apparatus according to claim 14, wherein the incremental operation record set synchronization unit comprises:
a first incremental operation record filtering unit, configured to select, from the N^{th} intermediate-format incremental operation record set based on an identifier of a target data table, an intermediate-format incremental operation record related to the target data table;
a data table-based incremental operation record conversion unit, configured to convert, into a target-format incremental operation record related to the target data table, the intermediate-format incremental operation record related to the target data table; and
a first incremental operation record sending unit, configured to send, to the target database, the target-format incremental operation record related to the target data table, for causing the target database to perform an incremental operation corresponding to the target-format incremental operation record related to the target data table.

17. The data synchronization apparatus according to any one of claims 11 to 13, wherein the incremental operation record set obtaining unit comprises:
a data table-based incremental operation record set obtaining unit, configured to obtain, from the incremental log in the source database based on an identifier of a target data table, the N incremental operation record sets arranged in the chronological order.

18. The data synchronization apparatus according to any one of claims 11 to 13, wherein the incremental operation record set synchronization unit comprises:
a second incremental operation record filtering unit, configured to select, from the N^{th} incremental operation record set based on an identifier of a target data table, an incremental operation record related to the target data table; and
a second incremental operation record sending unit, configured to send, to the target database, the incremental operation record related to the target data table, for causing the target database to perform an incremental operation corresponding to the incremental operation record related to the target data table.

19. The data synchronization apparatus according to claim 11, wherein the incremental operation record set synchronization unit comprises:
a target database synchronization unit, configured to send the N^{th} incremental operation record set to the target database, for causing the target database to perform an incremental operation corresponding to the N^{th} incremental operation record set.

20. The data synchronization apparatus according to claim 12, wherein the validation code generation unit comprises:
an incremental operation record set validation code generation unit, configured to generate the validation code of the N^{th} incremental operation record set based on a validation code of an (N-1)^{th} incremental operation record set and the N^{th} incremental operation record set.

21. A computing device cluster, comprising at least one computing device, wherein each computing device comprises a processor and a memory; and
the processor of the at least one computing device is configured to execute instructions stored in the memory of the at least one computing device, to cause the computing device cluster to perform the method according to any one of claims 1 to 10.

22. A computer program product comprising instructions, wherein when the instructions are run by a computing device cluster, the computing device cluster is caused to perform the method according to any one of claims 1 to 10.

23. A computer-readable storage medium, comprising computer program instructions, wherein when the computer program instructions are executed by a computing device cluster, the computing device cluster performs the method according to any one of claims 1 to 10.
